# EUROPÄISCHE PATENTSCHRIFT

(11) **EP 1 025 387 B1**
(45) Veröffentlichungstag und Bekanntmachung des Hinweises auf die Patenterteilung: **07.11.2001**
(21) Anmeldenummer: 98965132.8
(22) Anmeldetag: 13.10.1998
(51) Int. Cl.: B60Q 3/02, H05B 33/12

(54) **LEUCHTVORRICHTUNG**
ILLUMINATING DEVICE
DISPOSITIF D'ECLAIRAGE

(30) Priorität: 13.10.1997 AT 173097; 12.02.1998 AT 7698 U
(43) Veröffentlichungstag der Anmeldung: 09.08.2000
(73) Patentinhaber: Magna Auteca AG, 8160 Krottendorf (AT)
(72) Erfinder: MACHER, David, A-8570 Voitsberg (AT); ZORN, Heinz, A-8063 Eggersdorf (AT); STARK, Johann, A-8010 Graz (AT); FRITZL, Raimund, A-8010 Graz (AT)
(74) Vertreter: Pfenning, Meinig & Partner GbR
(86) Internationale Anmeldenummer: EP9806481
(87) Internationale Veröffentlichungsnummer: WO9920936

(56) Entgegenhaltungen:
- EP-A- 0 286 748
- EP-A- 0 334 799
- EP-A- 0 611 040
- GB-A- 2 099 628
- US-A- 5 434 013
- US-A- 5 566 384

## Beschreibung

Die Erfindung betrifft eine Leuchtvorrichtung, die an Kraftfahrzeugen und/oder in Innenräumen von Kraftfahrzeugen angeordnet ist.

In Innenräumen von Kraftfahrzeugen sind eine Vielzahl von Beleuchtungseinrichtungen vorgesehen, beispielsweise die allgemeine Raumbeleuchtung, Ambientbeleuchtung, eine Kosmetikspiegelbeleuchtung, eine Kofferraumbeleuchtung, Aschenbecherbeleuchtungen und in letzter Zeit auch Beleuchtungen im Außenbereich der Tür, um dem Benutzer den Weg in das Fahrzeug zu zeigen. Die in den Leuchten verwendeten Lichtquellen bzw. Leuchtmittel sind relativ platzaufwendig und müssen auswechselbar gestaltet sein.

Aus der EP 0 611 040 A1 ist ein Elektrolumineszenz-Leuchtstreifen bekannt,der an einem Fahrzeug angebracht werden kann. Der Leuchtstreifen besteht aus einer ersten leitenden Schicht, einer Phosphormatrixschicht und einer zweiten leitenden Schicht, die von extrudierten, wasserundurchlässigen Polymerschichten eingekapselt sind. Die leitenden Schichten sind über Busstreifen mit einer elektrischen Aktivierungsvorrichtung verbunden.

Der Erfindung liegt die Aufgabe zugrunde, eine Leuchtvorrichtung zur Anbringung in Kraftfahrzeugen zu schaffen, die platzsparend ist und die eine lange Lebensdauer aufweist.

Diese Aufgabe wird erfindungsgemäß durch die Merkmale des Hauptanspruchs gelöst.

Dadurch, daß die Leuchtvorrichtung eine Elektrolumineszenz-Schichtanordnung aufweist, die mindestens eine erste Elektrodenschicht, eine Dielektrikumsschicht, eine Elektrolumineszenz-Leuchtschicht und eine transparente zweite Elektrodenschicht aufweist, wobei die Elektrolumineszenz-Schichtanordnung auf einem Träger und/oder in einem Rahmen angeordnet ist und die Elektrodenschichten mit einer Wechselspannungs-Ansteuereinrichtung verbunden sind, wird eine platzsparende Möglichkeit für eine Leuchtvorrichtung geliefert, die vielfältige Einsatzmöglichkeiten aufweist. Die Elektrolumineszenz-Schichtanordnung kann in Dickschichttechnik im Siebdruck oder in Dünnschichttechnik auf den Träger aufgebracht sein, sie kann auch separat als Leuchtfolie ausgebildet sein.

Besonders vorteilhaft ist, wenn die Wechselspannungs-Ansteuereinrichtung auf einer Leiterplatte angeordnet ist, die mit dem Träger verbunden und/oder gleichzeitig als Träger für die Elektrolumineszenz-Schichtanordnung ausgebildet ist, dadurch eine kompakte Baueinheit gebildet wird, die in entsprechender Aufnahmen eingeklipst oder anderweitig eingesetzt werden kann.

Durch die in den Unteransprüchen angegebenen Maßnahmen sind vorteilhafte Weiterbildungen und Verbesserungen möglich.

Die Leuchtvorrichtung kann in beliebigen Größen ausgebildet sein und es ist möglich, die Elektrolumineszenz-Schichtanordnung bzw. die Leuchtfolie auf einen flexiblen Träger aufzubringen, so daß auch bei großflächigen Leuchten eine Anpassung an die Kontur des Fahrzeugs möglich ist. Die elektrische Ansteuereinrichtung kann dabei trotz Kapazitätsänderung der Folie aufgrund ihrer Geometrie so angepaßt werden, daß der gewünschte Farbton und die gewünschte Intensität der ausgesandten Strahlung erzielt wird. Falls gewünscht wird, kann eine Regelung der Intensität der ausgesandten Strahlung vorgenommen werden, wodurch die Umgebungshelligkeit mit einbezogen werden kann und wodurch ein Helligkeitsabfall aufgrund der Lebensdauer kompensiert werden kann.

Die verwendete Leuchtvorrichtung kann, wie schon oben ausgeführt, für unterschiedlichste Beleuchtungszwecke eingesetzt werden, sie kann auch zur Hinterleuchtung von Hinweisschildern im Fahrzeug verwendet werden, was insbesondere für Beförderungsfahrzeuge von Vorteil ist.

Ausführungsbeispiele der Erfindung sind in der Zeichnung dargestellt und werden in der nachfolgenden Beschreibung näher erläutert. Es zeigen
Fig. 1 einen Schnitt durch die erfindungsgemäße Leuchtvorrichtung,
Fig. 2 eine perspektivische Aufsicht auf eine leuchtende Spiegeleinheit,
Fign. 3 bis 5 verschiedene Ausführungsformen der erfindungsgemäßen Leuchtvorrichtung in Sonnenblenden,
Fig. 6 die Anordnung der erfindungsgemäßen Leuchtvorrichtung in einem Handschuhfach,
Fig. 7 eine erste schaltungsgemäße Ausgestaltung einer bei der erfindungsgemäßen Leuchtvorrichtung verwendeten Ansteuereinrichtung,
Fig. 8 eine zweite schaltungsgemäße Ausgestaltung der Ansteuereinrichtung in Form eines Hartley-Oszillators,
Fig. 9 eine dritte schaltungsgemäße Ausgestaltung der Ansteuervorrichtung mit Regelung,
Fign. 10 und 11 die Anordnung einer erfindungsgemäßen Leuchtvorrichtung an einem Außenspiegel,
Fig. 12 die Aufsicht auf einen Außenspiegel mit in der Spiegelfläche integriertem Blinklicht und
Fig. 13 einen Schnitt durch einen Außenspiegel gemäß Fig. 12, wobei die erfindungsgemäße Leuchtvorrichtung verwendet wird.

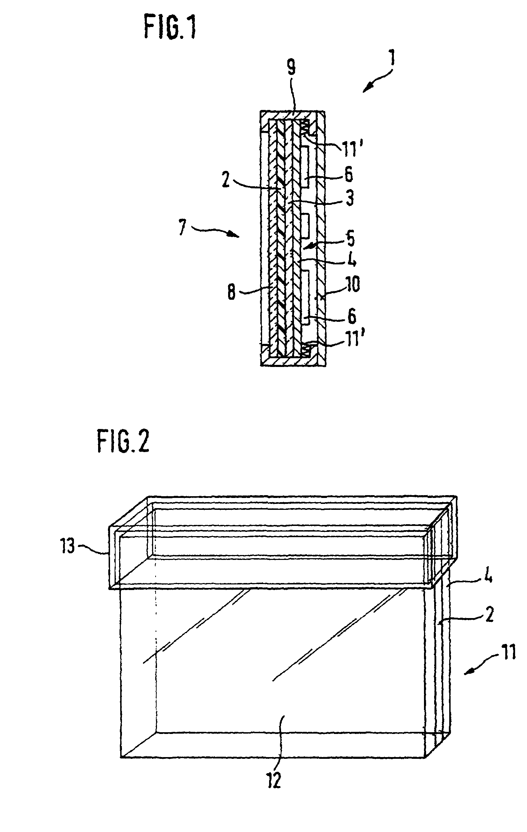

In Fig. 1 ist ein Schnitt durch eine Leuchtvorrichtung nach einem ersten Ausführungsbeispiel dargestellt. Die Leuchtvorrichtung weist als wesentlichen Bestandteil eine Elektrolumineszenz-Schichtanordnung 2 auf, die als Leuchtfolie ausgebildet sein kann. Die Elektrolumineszenz-Schichtanordnung bzw. Leuchtfolie 2 umfaßt eine Leuchtschicht, die Leuchtstoffkörner beinhaltet oder als einheitliche Dünnschicht ausgebildet wird, eine mit der Leuchtschicht verbundene transparente elektrisch leitende Elektrodenschicht, eine gleichfalls mit der Leuchtschicht verbundene Isolations- bzw. Dielektrikumschicht und eine Rückelektrodenschicht, die beispielsweise aus Metall bestehen kann. Bei der Leuchtfolie ist vorzugsweise zusätzlich ein Kunststoffsubstrat als eine Trägerschicht vorgesehen, auf die die Schichtanordnung aufgebaut wird. Dieses kann beispielsweise gleichfalls transparent sein und mit der transparenten Elektrodenschicht in Verbindung stehen.

Bei Anlegen einer Wechselspannung bestimmter Amplitude und Frequenz an die Elektrodenschichten werden Elektronen in Leuchtzentren angeregt. Die Rekombination dieser angeregten Elektronen findet unter Aussendung von Licht statt.

In Fig. 1 ist die Elektrolumineszenz-schichtanordnung bzw. die Leuchtfolie 2 mit einem Träger 3 verbunden, wobei die Verbindung durch Auflaminieren, Verkleben oder dergleichen realisiert sein kann. Auch ein direktes Aufbringen der Schichten auf den Träger ist denkbar, wobei der Träger aus leitfähigem Material besteht oder leitfähig beschichtet ist und als Rückelektrode dient. Die Elektrolumineszenz-Anordnung kann in Dickschicht- oder Dünnschichttechnik aufgebracht werden, wobei im letzteren Fall der Träger vorzugsweise aus Glas besteht. Wiederum mit der Trägerplatte 3 ist eine Leiterplatte 4 verbunden, die starr oder flexibel ausgebildet sein kann, wobei die Leiterplatte 4 die Bestandteile einer elektrischen bzw. elektronischen Ansteuereinheit 5, d.h. die für die Ansteuereinheit 5 verwendete elektrische Beschaltung sowie die verwendeten elektrischen und elektronischen Bauteile 6 enthält.

Die Leuchtfolie 2 ist zu der Lichtabstrahlseite 7 mit einer transparenten Abdeck- oder Schutzschicht 8 abgedeckt, die aus Glas oder Kunststoff besteht. Diese Abdeckschicht 8, die auch mehrschichtig ausgebildet sein kann, kann Farbpigmente zur Umwandlung der Lichtfarbe der von der Leuchtfolie 2 ausgesandten Strahlung oder auch eine Schicht zur Streuung oder Richtungsänderung der von der Leuchtfolie 2 austretenden Strahlung enthalten, wie beispielsweise eine Prismenschicht, eine Volumenstreuschicht oder dergleichen. Die beschriebene Schichtanordnung ist in einem Rahmenelement 9 aufgenommen, das eine die Leiterplatte 4 mit den elektrischen Bauelementen 6 abdeckende Rückwand 10 aufweisen kann. Weiterhin können zur Dämpfung und für ein Zusammenpressen der einzelnen Elemente, insbesondere wenn diese nicht fest miteinander verbunden sind, Dämpfungs-, Dichtungs- oder Federelemente 11 vorgesehen sein.

Der so beschriebene Aufbau bildet eine kompakte leuchtende Baueinheit 1, die als Gesamtheit in eine in oder am Fahrzeug vorgesehene Aufnahme, die beispielsweise als Kunststoffwanne oder Kunststoffrahmen ausgebildet sein kann, in einer kraft- und/oder formschlüssigen Verbindung, z.B. durch Rastung eingesetzt werden kann.

Die Leiterplatte 4 weist dabei Anschlüsse auf, die über eine elektrische Leitung mit der Batterie des Fahrzeugs verbunden werden.

In dem beschriebenen Ausführungsbeispiel ist eine flexible oder starre Trägerplatte 3 vorgesehen, die zur Fixierung der Leuchtfolie 2 dient. Es ist auch denkbar, daß diese Trägerplatte 3 weggelassen wird und daß die Leiterplatte 4 gleichzeitig als Trägerplatte dient. Auf diese Weise kann die Dicke der leuchtenden Baueinheit weiter verringert werden.

In dem in Fig. 1 beschriebenen Ausführungsbeispiel ist die Ansteuereinheit in Form der Leiterplatte 4 und der Bauelemente 6 direkt der Leuchtfolie zugeordnet, so daß eine funktionstüchtige leuchtende Baueinheit 1 gebildet wird. Die Anordnung der Ansteuereinheit in unmittelbarer Nähe der Leuchtfolie bzw. der Schichtanordnung bietet weiter den Vorteil, daß höherfrequente Einstreuungen ins Bordnetz vermieden werden (elektromagnetische Verträglichkeit). Es ist jedoch auch denkbar, daß die Ansteuereinheit 5 an anderer Stelle im Fahrzeug untergebracht wird und daß eine Konstruktionseinheit mit einem Aufbau entsprechend Fig. 1 ohne die Leiterplatte 4 gebildet wird. Dies ist möglicherweise dann vorzuziehen, wenn mehrere derartige Konstruktionseinheiten im Fahrzeug verteilt sind und von einer Ansteuereinheit angesteuert werden.

Die in Fig. 1 beschriebene leuchtende Baueinheit 1 aber auch die Konstruktionseinheit ohne Leiterplatte und elektrische Bauelemente sind insbesondere für großflächige Leuchtvorrichtungen flexibel ausgebildet, so daß sie sich an die Kontur entsprechend der Fahrzeugteile anpassen lassen.

In Fig. 2 ist eine leuchtende Spiegeleinheit 11 dargestellt, die grundsätzlich einen ähnlichen Aufbau wie Fig. 1 aufweist. Ein Spiegel 12, der beispielsweise aus einer Glasplatte mit Spiegelbeschichtung besteht, ist benachbart zur Elektrolumineszenz-Schichtanordnung bzw. Leuchtfolie 2, im Ausführungsbeispiel ist die Leuchtfolie als Band über der Spiegelfläche 12 angeordnet, vorgesehen, und die Leiterplatte 4 ist mit dem Spiegel 12, d.h. mit seiner Rückseite verbunden. Dabei dient die Leiterplatte 4 gleichzeitig als Träger für den Spiegel 12. In dem Ausführungsbeispiel nach Fig. 2 ist die abstrahlende Fläche 2 von einem durchsichtigen Rahmenelement 13 abgedeckt, das gleichzeitig die Baueinheit bestehend aus Spiegel 12, Leuchtfolie 2, Leiterplatte 4 mit Bauelementen 6 und ggf. weitere Schichten, wie im Zusammenhang mit Fig. 1 beschrieben wurde, zumindest teilweise übergreift. Anstelle des Rahmenelementes 13 kann auch ein umlaufendes Rahmenelement oder ein gehäuseähnliches Rahmenelement mit Rückwand vorgesehen sein. Auch kann der Spiegel 12 selbst als Träger dienen, wobei die Leiterplatte 4 nicht die gleichen Abmessungen wie der Spiegel haben muß. Die Leuchtfolie 2 kann dann auch auf der Oberfläche des Spiegels 12 befestigt sein.

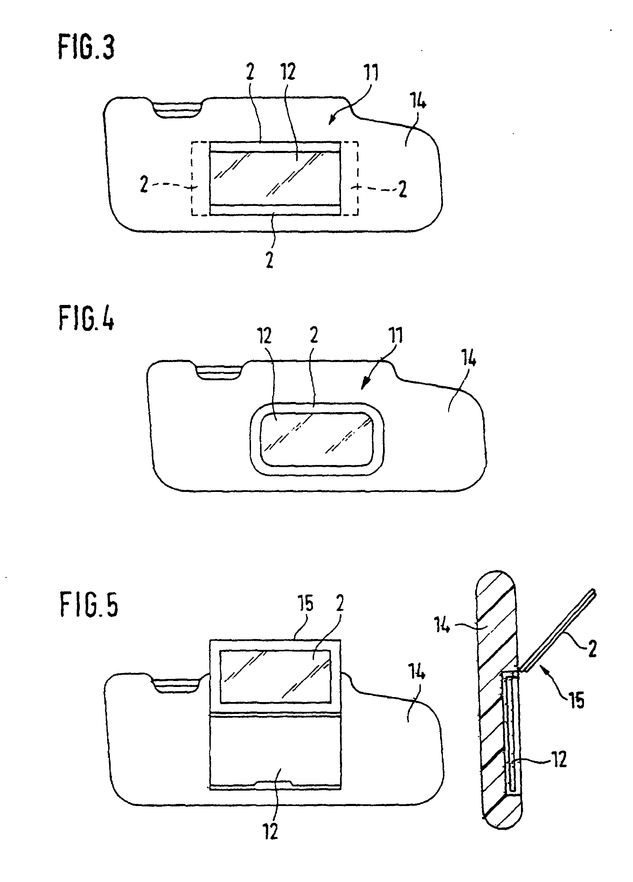

Die leuchtende Spiegeleinheit 11 kann sowohl im vorderen als auch im hinteren Fahrgastraum ebenso wie die leuchtende Baueinheit 1 eingebaut werden. In den Fign. 3 bis 5 sind beispielsweise Ausführungsbeispiele dargestellt, in denen Anordnungen der Spiegelelemente in einer Sonnenblende 14 schematisch dargestellt sind. In den Körper der Sonnenblende 14 ist eine nicht näher dargestellte Kunststoffwanne eingelassen, in die eine leuchtende Spiegeleinheit 11 eingesetzt ist. In Fig. 3 sind oberhalb und/oder unterhalb der eigentlichen Fläche des Spiegels 12 durch die Leuchtfolie 2 realisierte leuchtende Bänder vorgesehen, die, wie strichpunktiert angedeutet auch zusätzlich oder anstelle der waagerechten Bänder seitlich rechts und/oder links angeordnet sein können. In Fig. 4 ist die leuchtende Spiegeleinheit 11 mit einem um den Umfang der eigentlichen Spiegelfläche 12 umlaufenden Leuchtfolienband versehen.

Die leuchtende Spiegeleinheit 11, d.h. die Leuchtfolie 2 der leuchtenden Spiegeleinheit 11 soll nur dann angesteuert werden, wenn der Benutzer gewollt in den Spiegel blickt, d.h. es muß eine Schaltervorrichtung vorgesehen sein, die mit der Ansteuereinheit 5 in Verbindung steht. Dazu ist beispielsweise in den Ausführungsbeispielen 3 und 4 eine Schieberanordnung vorgesehen, die im geschlossenen Zustand die Spiegelfläche 12 abdeckt und zum Betrachten von dem Benutzer aufgeschoben wird. Daher kann eine leuchtende Spiegeleinheit 11 entsprechend Fig. 2 so modifiziert werden, daß sie mit einer den Schieber zum Abdecken des Spiegels 12 aufweisenden Verkleidung verbunden ist. In einem solchen Fall wird das die leuchtende Spiegeleinheit 11 umfassende Verkleidungsteil mit Schieber in die oben beschriebene Kunststoffwanne eingeknips oder eingerastet.

In Fig. 5 ist ein weiteres Ausführungsbeispiel eines beleuchteten Spiegels in der Sonnenblende schematisch in der Aufsicht und im Schnitt dargestellt. In diesem Fall ist der Spiegel fest in eine Kunststoffwanne eingesetzt und die Leuchtfolie 2 mit Träger bildet eine über ein Scharnier gelenkte Klappe 15, wobei die die Leuchtfolie 2 aktivierende Schaltervorrichtung beim Öffnen der Klappe 15 aktiviert wird. Die Ansteuereinheit 5 mit Leiterplatte und Bauelementen kann entweder hinter dem Spiegel 12 oder hinter der Leuchtfolie 2 sitzen.

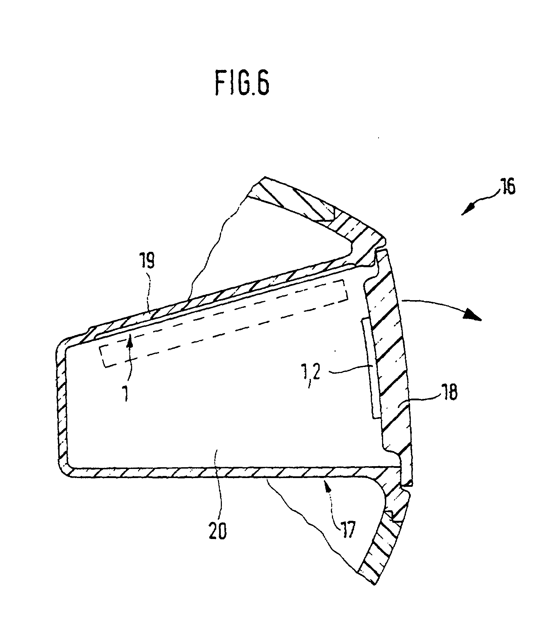

In Fig. 6 ist ein weiteres Ausführungsbeispiel für eine Anordnung der Leuchtvorrichtung, die als Baueinheit 1 ausgebildet sein kann, dargestellt. Es handelt sich hier um den Schnitt durch ein Handschuhfach in einem Verkleidungsteil 16, wobei das Handschuhfach Begrenzungswände 17 und ein Türelement 18 aufweist. Die als Baueinheit 1 (Fig. 1) ausgebildete Leuchtvorrichtung kann dabei beispielsweise in einer Vertiefung der oberen Wand 19, einer oder beider Seitenwände 20, wie strichliniert angedeutet ist oder auch in oder an dem Türelement 18 angeordnet sein. Auch hier sind entsprechende Aufnahmen als Vertiefungen in den Begrenzungswänden oder als Aufbauten auf den Begrenzungswänden vorgesehen. In dem Schließbereich des Türelementes 18 ist eine Schaltervorrichtung vorgesehen, die wiederum bei Öffnen des Türelementes 18 die Leuchtfolie aktiviert.

Die Leuchtvorrichtung kann wie schon oben beschrieben, vielfältig im Fahrzeuginnenraum als allgemeine Beleuchtung oder auch als gezielte Beleuchtung von Teilen verwendet werden. Die Leuchtvorrichtung kann beispielsweise für eine Ambientbeleuchtung, Kofferraumbeleuchtung, für die Beleuchtung von Aschenbechern, von elektrischen Fensterhebern oder Schaltern oder an bzw. in den Türen oder Türschwellen, oder im Dachhimmel eingesetzt werden.

In einem nicht dargestellten Ausführungsbeispiel ist eine Baueinheit der Leuchtvorrichtung entsprechend Fig. 1 in einer im Dachhimmel eingesetzten Aufnahme angeordnet und zwar vorzugsweise im Bereich einer hochgeklappten Sonnenblende. Die Leuchtvorrichtung bzw. die Aufnahme im Dachhimmel sind so ausgerichtet, daß der in der Sonnenblende angebrachte Spiegel bei heruntergeklappter Sonnenblende beleuchtet wird. Dabei steht wiederum die Ansteuervorrichtung der Leuchtvorrichtung im Dachhimmel mit einem durch den Schieber oder Klappe vor der Sonnenblende betätigten Schalter in Verbindung, der die Leuchtvorrichtung einschaltet.

Wie oben ausgeführt wurde wird die elektrolumineszierende Schichtanordnung bzw. die Leuchtfolie 2 über eine Wechselspannung im Bereich von ca. 100 bis beispielsweise 250 V und einer Frequenz zwischen 300 Hz und 30 kHz angesteuert. Diese Wechselspannung wird an die Elektrodenschichten angelegt, wobei im Kraftfahrzeug bei Verwendung der Batteriespannung von üblicherweise 12 V Gleichspannung die Ansteuervorrichtung eine entsprechende Umwandlung in die angegebenen Größen vornehmen muß.

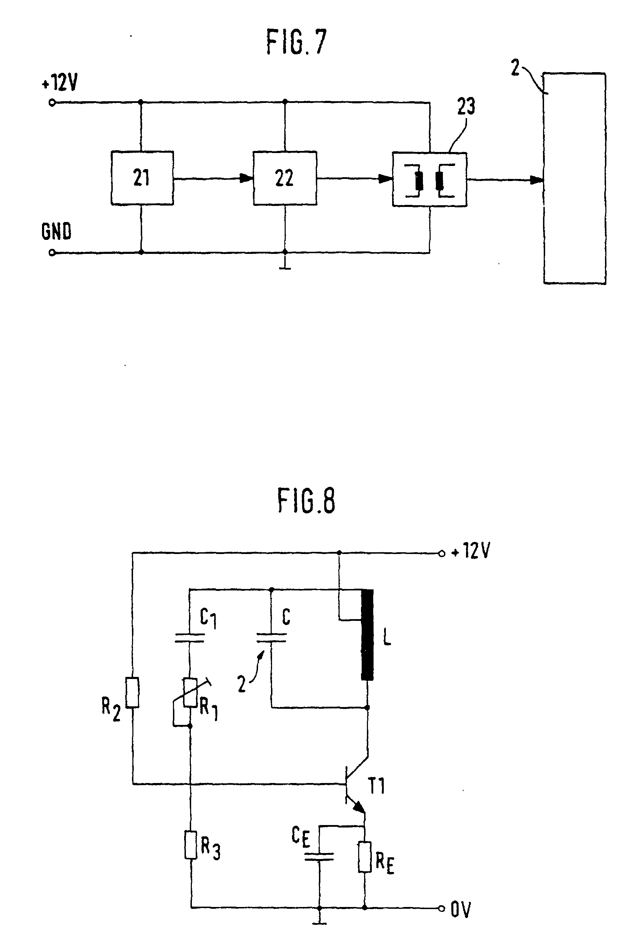

In Fig. 7 ist eine erste schaltungsgemäße Ausgestaltung einer Ansteuereinheit dargestellt. Dabei ist ein frequenzstabiler Oszillator 21 mit der Batterie verbunden, der ein entsprechendes Niederspannungssignal mit einer Frequenz vorzugsweise zwischen 600 Hz und 4 kH liefert. Diese Spannung wird in einem Leistungsverstärker 22 verstärkt und einem Hochspannungsübertrager 23 zugeführt, der die Niederspannung vorzugsweise auf 100 bis 200 V hochtransformiert. Mit der Ausgangsspannung des Hochspannungsübertragers 23 werden die Elektroden der Leuchtfolie 2 angesteuert. In diesem Ausführungsbeispiel ist die Frequenz unabhängig von der Leuchtfolie 2 fest vorgegeben.

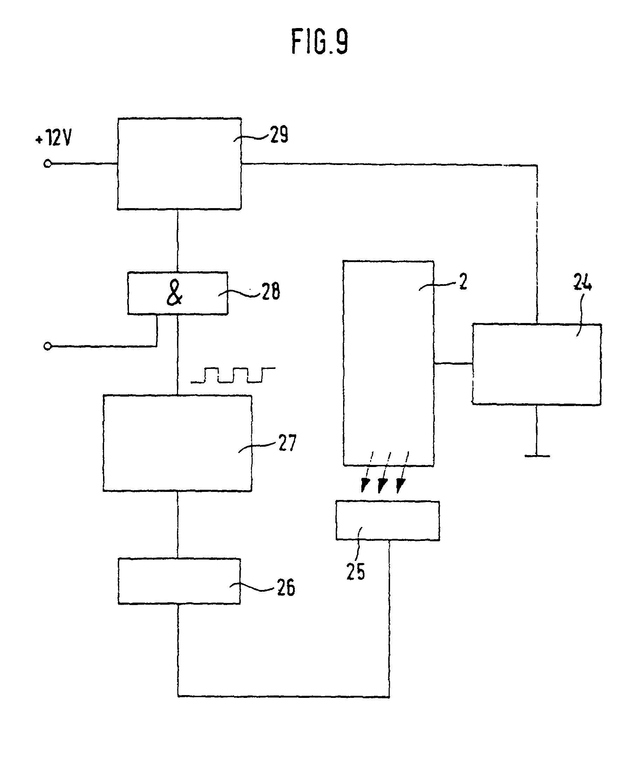

In Fig. 8 ist eine weitere als Spannungskonverter ausgebildete Ansteuervorrichtung vorgesehen, bei der die Folie 2, d.h. die Kapazität des Elektrolumineszenz-Schichtaufbaus als Frequenz bestimmendes Element verwendet wird. In Fig. 8 ist die Folie 2, die eine Kapazität C aufweist, Bestandteil eines Oszillators in Dreipunktschaltung nach Hartley. Das frequenzbestimmende Glied ist der Schwingkreis bestehend aus der Kapazität C und einer Induktivität der Spule L, wobei der Abgriff der Spule mit der Batteriespannung verbunden ist. In Reihe mit dem Schwingkreis ist die Kollektor-Emitterstrecke eines als Verstärker wirkenden Transistors T1 geschaltet, der über eine Parallelschaltung eines Kondensators C_{E} und eines Widerstandes R_{E}, die zur Stabilität und zur Begrenzung des Kollektorstroms und damit der Schwingungsamplitude dienen, an Masse geschaltet ist. Der Schwingungskreis ist an seinem vom Kollektor des Transistors T1 abgewandten Verbindungspunkt über eine RC-Schaltung C1 und R1 mit der Basis des Transistors verbunden, wobei über diese Reihenschaltung der Grad der Kopplung einstellbar ist. Weiterhin wird über eine Reihenschaltung der Widerstände R₂, R₃ die zwischen Batteriespannung und Masse liegen und deren Verbindungspunkt mit der Basis des Transistors verbunden ist, der Arbeitspunkt eingestellt. Mit dem Abgriff an der Induktivität wird eine Phasendrehung der Rückkopplungsspannung von 180° erreicht, um die bei dem Transistorverstärker zwischen seinem Eingangsstrom an der Basis und seinem Ausgangsstrom am Kollektor auftretende Gegenphase aufzuheben.

Da die Leuchtfolie eine Kapazität aufweist, die wiederum von der Geometrie bzw. der Größe der Folie abhängt würde sich die Intensität und der Farbton der Leuchtfolie mit der Größe der Leuchtfolie ändern, weil die Kapazität der Folie die Frequenz beeinflußt.

Entsprechend dem gewünschten Farbton und der Helligkeit, die auch von der Spannung beeinflußt wird, wird je nach Größe der Leuchtfolie 2 die Induktivität ausgewählt.

In Fig. 9 ist eine weitere schaltungsgemäße Ausgestaltung vorgesehen, die zur Regelung der Helligkeit und zur Kompensation des mit der Lebensdauer auftretenden Helligkeitsabfalls der Folie dient.

In Fig. 9 wird wiederum die Folie 2 von einem Spannungskonverter 24 angesteuert, der entsprechend Fig. 7 oder Fig. 8 ausgebildet sein kann. Der Leuchtfolie 2 ist ein Lichtsensor 25 zugeordnet, der mit einem Meßwertwandler 26 verbunden ist. Der Meßwertwandler ist an die eigentliche Regeleinheit 27 angeschlossen, die abhängig von dem Ausgangssignal des Meßwertwandlers und einem vorgegebenen Sollwert ein Regelsignal an ihren Ausgang liefert. Vorzugsweise arbeitet die Regeleinheit in der Impuls-Weiten Modulation, d.h. das Ausgangsignal der Regeleinheit 27 ist ein Impulsfolgesignal, das im Tastverhältnis veränderlich ist. Im dargestellten Ausführungsbeispiel geht das Ausgangssignal auf ein UND-Gatter 28, an dessen zweiten Eingang das Signal von der in den Fign. 3 bis 6 verwendeten Schaltervorrichtung liegt. Der Ausgang des UND-Gatters 28 ist mit dem Steuereingang eines elektronischen Leistungsschalters 29 verbunden, der entsprechend dem Ausgangssignal des UND-Gatters 28 ein Impulssignal an den Spannungskonverter 24 liefert. Wenn der Schalter eingeschaltet ist, d.h. am zweiten Eingang des UND-Gatters 28 ein Signal anliegt bestimmt das Ausgangssignal der Regeleinheit 27 das Tastverhältnis des Impulssignals am elektronischen Leistungsschalter 29, so daß über den Spannungskonverter 24 die Leuchtfolie 2 mit dem geregelten Signal angesteuert wird.

Selbstverständlich sind andere Wechselspannungsansteuer-Einheiten als die in Fign. 7 bis 9 beschriebenen denkbar. Der Spannungskonverter kann entsprechend dem Anwendungszweck der Leuchtfolie bzw. der Leuchtvorrichtung auch mehrstufig angeordnet sein. Beispielsweise können in ähnlicher Weise wie in Fig. 9 ein oder mehrere elektronische Schalter in die Zuleitung zu dem Spannungskonverter eingesetzt werden, die jeweils abhängig von Steuersignalen unterschiedlicher Frequenz z.B. von unterschiedlichen Oszillatoren durchgeschaltet werden. Auf diese Weise wird ein sogenannter getakteter schonender Betrieb der Leuchtfolie möglich, wodurch deren Lebensdauer erhöht wird. Diese Steuerung durch die elektronischen Schalter kann auch zwischen Spannungskonverter und Leuchtfolie angeordnet werden.

Die Leuchtvorrichtung ist auch im Außenbereich des Kraftfahrzeugs einsetzbar, beispielsweise kann die Leuchtvorrichtung zur Beleuchtung des Eingangsbereichs des Fahrzeugs dienen, wobei sie in den Türrahmen oder die Außenspiegel eingesetzt werden kann.

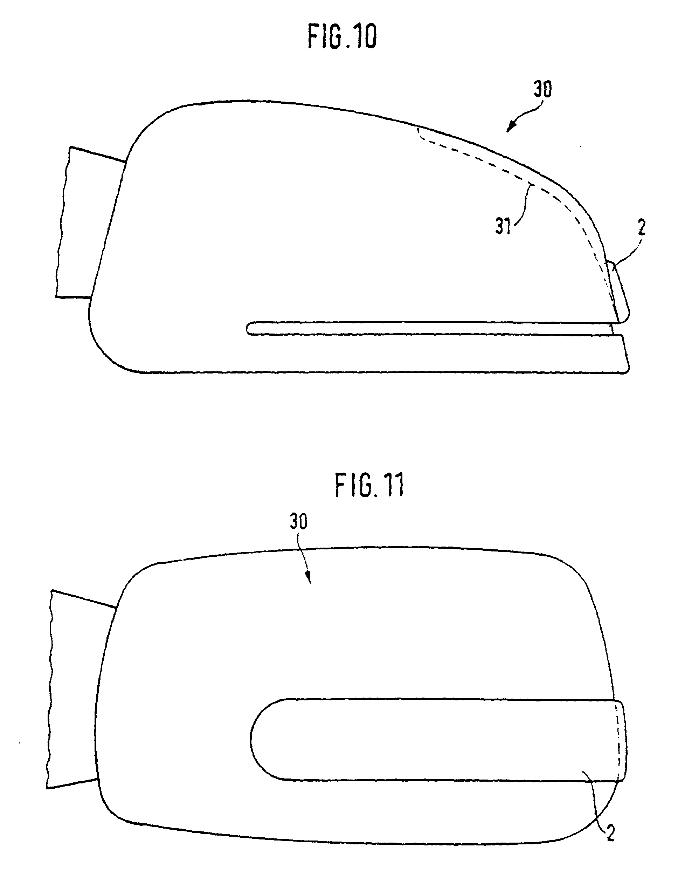

Auch ein Einsatz als Blinkleuchte ist denkbar, wobei in den Fign. 10 bis 13 zwei Möglichkeiten dargestellt sind, bei denen die Leuchtfolie bzw. Elektrolumineszenz-Schichtanordnung mit Ansteuereinheit an bzw. im Außenspiegel 30 angeordnet ist. In das Spiegelgehäuse bzw. auf das Spiegelgehäuse ist eine Leuchtfolie 2 bzw. Elektrolumineszenz-Schichtanordnung mit entsprechender Abdeckung angeordnet, und zwar in dem fahrzeugfernen Bereich des Spiegels, derart, daß von vorne kommende und besonders benachbarte Fahrzeuge das emittierte Licht sehen können. Vorzugsweise weist das Spiegelgehäuse eine Vertiefung 31 auf, in die die Leuchtfolie 2 mit Träger und Abdeckung und ggf. mit einem Rahmen eingesetzt werden kann. In diesem Fall schließt die Leuchtfolie bzw. die Baueinheit mit dem Spiegelgehäuse ab. Die elektronische Ansteuereinheit ist in diesem Fall vorzugsweise im Inneren des Spiegelgehäuses aufgenommen. Dabei muß die Ansteuereinheit hinsichtlich der zeitlichen Abfolge des auszustrahlenden Lichts so variiert werden, daß die Blinkpausen eingehalten werden.

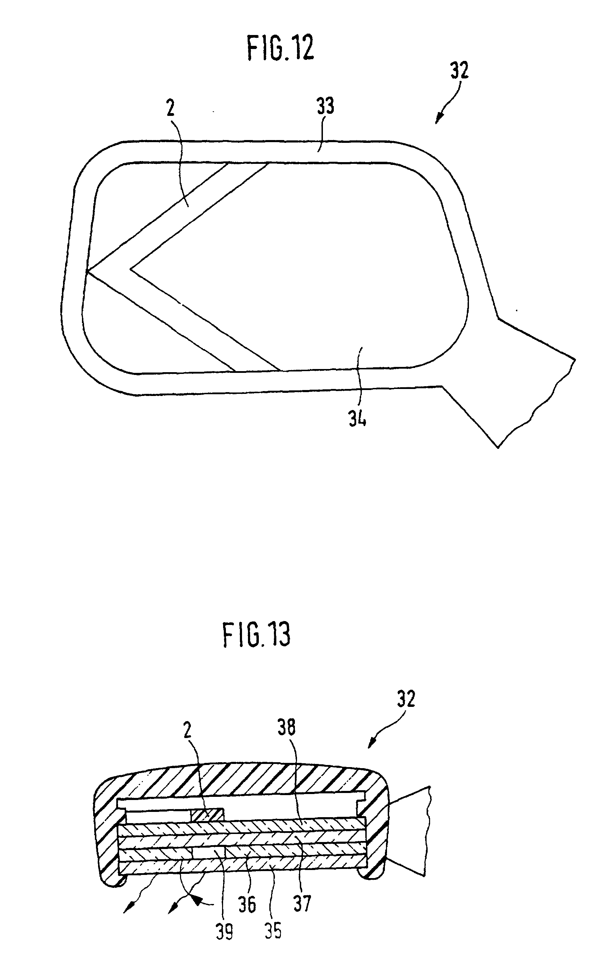

In den Fign. 12 und 13 ist die Leuchtvorrichtung im Inneren des Spiegels integriert und dient beispielsweise als Blinkvorrichtung in Form eines Pfeiles. Der in den Fign. 12 und 13 dargestellte Außenspiegel 32 weist ein Gehäuse 33 auf, in dem die Leuchtvorrichtung bzw. die Elektrolumineszenz-Schichtanordnung 2 angeordnet ist, wobei bei Aktivierung der elektrolumineszierenden Schichtanordnung 2 der Benutzer des Fahrzeugs nicht behindert werden darf, d.h. er muß die vollständige Spiegelfläche 34 zur Überwachung des Verkehrs zur Verfügung haben. Dazu weist der Spiegel 32 den in Fig. 13 dargestellten Schichtaufbau auf, der von außen nach innen eine Glasschicht 35, eine Spiegelschicht 36, eine dichroide Schicht 37, eine Umlenk- oder Lamellenschicht 38 und die Elektrolumineszenz-Schichtanordnung 2 in der gewünschten Form des Blinklichtes, hier als Pfeil ausgebildet umfaßt. In der Spiegelschicht 36 ist die Form der Elektrolumineszenz-Schichtanordnung 2 bzw. des Pfeiles ausgeätzt, wie dies durch den Freiraum 39 dargestellt ist. Die dichroide Schicht 37 läßt den Bereich 39 für den Fahrer spiegelnd erscheinen und außerdem läßt sie die von der Leuchtfolie erzeugte Strahlung selektiv durch. Die dichroide Schicht 37 befindet sich entweder hinter der gesamten reflektierenden Schicht 36 oder nur in dem Bereich, wo die elektrolumineszierende Schichtanordnung vorgesehen ist. Die Lamellenschicht 38 lenkt die von der Leuchtfolie ausgesandte Strahlung in eine Richtung, die von dem Fahrer nicht zu erkennen ist. Durch die Verwendung der Leuchtfolie kann der Außenspiegel 32 in seiner Dicke gering gehalten werden.

## Patentansprüche

1. Leuchtvorrichtung, die an Kraftfahrzeugen und/oder in Innenräumen von Kraftfahrzeugen angeordnet ist, mit einer Elektrolumineszenz-Schichtanordnung (2), die mindestens eine erste Elektrodenschicht, eine Dielektrikumsschicht, eine Elektrolumineszenz-Leuchtschicht und eine transparente zweite Elektrodenschicht aufweist, wobei die Elektrolumineszenz-Schichtanordnung (2) auf einem Träger (3, 4) und/oder in einem Rahmen (9, 13) angeordnet ist, und die Elektrodenschichten mit einer Wechselspannungs-Ansteuereinrichtung (5) verbunden sind,
**dadurch gekennzeichnet,**
**daß** die Wechselspannungs-Ansteuereinrichtung auf einer Leiterplatte (4) angeordnet ist, die mit dem Träger (3) verbunden ist und/oder gleichzeitig die Träger für die Elektrolumineszenz-Schichtanordnung (2) ausgebildet ist, wobei die Leiterplatte (4) mit Ansteuereinrichtung (5) und Elektrolumineszenz-Schichtanordnung (2) und gegebenenfalls einer die Elektrolumineszenz-Schichtanordnung (2) abdeckenden transparenten Abdeckung (8) eine kompakte Baueinheit bilden.

2. Leuchtvorrichtung nach Anspruch 1, **dadurch gekennzeichnet, daß** die Elektrolumineszenz-Schichtanordnung weitere Schichten, wie eine Farbpigmentschicht, Schichten zur Lichtstreuung, Schichten, die die Ausbreitungsrichtung der aus der Leuchtschicht austretenden Strahlung ändern, Reflexionsschicht, und/oder Schutzschichten aufweist.

3. Leuchtvorrichtung nach einem der Ansprüche 1 oder 2, **dadurch gekennzeichnet, daß** die Elektrolumineszenz-Schichtanordnung als Leuchtfolie ausgebildet ist oder in Dünn- oder Dickschichttechnik auf den Träger aufgebracht ist.

4. Leuchtvorrichtung nach Anspruch 3, **dadurch gekennzeichnet, daß** die Leuchtfolie auf den Träger (3, 4) aufgeklebt oder auflaminiert ist.

5. Leuchtvorrichtung nach einem der Ansprüche 1 bis 4, **dadurch gekennzeichnet, daß** der die Elektrolumineszenz-Schichtanordnung (2) aufnehmende Träger (3, 4) und/oder Rahmen oder die kompakte Baueinheit in eine Aufnahme kraft- und/oder formschlüssig eingesetzt ist, die an oder in den Begrenzungswänden oder der Innenverkleidung oder den Einbauten des Fahrzeugs angeordnet und mit diesen verbunden ist.

6. Leuchtvorrichtung nach Anspruch 5, **dadurch gekennzeichnet, daß** die Aufnahme in einer Sonnenblende (14) des Fahrzeugs angeordnet ist, wobei ein in der Sonnenblende angeordneter Spiegel (12) benachbart zur Elektrolumineszenz-Schichtanordnung (2) angeordnet ist.

7. Leuchtvorrichtung nach Anspruch 6, **dadurch gekennzeichnet, daß** der Spiegel mit der ersten Baueinheit verbunden und auf dem Träger (3, 4) angeordnet ist oder selber den Träger bildet, wobei die Elektrolumineszenz-Schichtanordnung neben oder auf einem Teil des Spiegels (12) angeordnet ist, wodurch eine leuchtende Spiegelbaueinheit (11) gebildet wird.

8. Leuchtvorrichtung nach einem der Ansprüche 6 oder 7, **dadurch gekennzeichnet, daß** die Elektrolumineszenz-Schichtanordnung (2) auf der Innenseite einer den Spiegel (12) in der Aufnahme abdeckenden Klappe (15) angeordnet ist.

9. Vorrichtung nach Anspruch 7, **dadurch gekennzeichnet, daß** die Spiegelbaueinheit mit einem Gehäuseteil verbunden ist, das einen den Spiegel abdeckenden Schieber oder eine den Spiegel abdeckende Klappe aufweist.

10. Leuchtvorrichtung nach Anspruch 5, **dadurch gekennzeichnet, daß** die Aufnahme an oder in der Begrenzungswand oder im Türelement eines Handschuhfachs angeordnet ist.

11. Leuchtvorrichtung nach Anspruch 5, **dadurch gekennzeichnet, daß** die Aufnahme in der Innenverkleidung des Dachhimmels angeordnet ist.

12. Leuchtvorrichtung nach Anspnuch 5, **dadurch gekennzeichnet, daß** die Aufnahme in einem Spiegelgehäuse auf einer vom Benutzer eines Fahrzeugs abgewandten Seite eines Außenspiegels angeordnet ist.

13. Leuchtvorrichtung nach einem der Ansprüche 1 bis 12, **dadurch gekennzeichnet, daß** die Ansteuereinrichtung (5) einen spannungskonverter aufweist, der eine Gleichspannung, vorzugsweise die Batteriespannung des Fahrzeugs in eine Wechselspannung größer als 100 V mit einer Frequenz von größer als 50 Hz umwandelt.

14. Leuchtvorrichtung nach Anspruch 13, **dadurch gekennzeichnet, daß** die Ansteuereinrichtung (5) eine Regelung (25, 26, 27, 29) aufweist, die einen Lichtsensor (25) zum Erfassen der Helligkeit der Elektrolumineszenz-Schichtanordnung (2) umfaßt und die die Wechselspannung entsprechend einer gewünschten Helligkeit regelt.

15. Leuchtvorrichtung nach einem der Ansprüche 1 bis 5, 12 oder 13, **dadurch gekennzeichnet, daß** die Elektrolumineszenz-Schichtanordnung innerhalb des Gehäuses eines Außenspiegels derart integriert ist, daß sich folgender Schichtaufbau ergibt: eine Glasschicht, eine geätzte Spiegelschicht, eine dichroide Schicht, eine die Strahlung umlenkende Lamellenschicht und die Elektrolumineszenz-Schichtanordnung aufweist.

## Claims

1. Illuminating device which is arranged on motor vehicles and/or in interior spaces of motor vehicles, comprising an electro-luminescence layer structure (2) with at least a first electrode layer, a dielectric layer, an electro-luminescence illuminating layer and a transparent second electrode layer, and the electro-luminescence layer structure (2) is arranged on a support (3, 4) and/or in a frame (9, 13), and the electrode layers are connected to an alternating current control unit, **characterised in that** the alternating current control unit is arranged on a printed circuitboard (4) which is connected to the support (3) and/or at the same time designed as supports for the electro-luminescence layer structure (2), and the printed circuitboard (4) with control unit (5) and electro-luminescence layer structure (2) and, if appropriate, a transparent cover (8) which covers the electro-luminescence layer structure (2) form a compact module.

2. Illuminating device according to Claim 1, **characterised in that** the electro-luminescence layer structure comprises additional layers, such as a colour pigment layer, layers for light scattering, layers which alter the dispersion direction of radiation emitted from the illuminating layer, reflection layer and/or protective layers.

3. Illuminating device according to one of Claims 1 or 2, **characterised in that** the electro-luminescence layer structure is designed as an illuminating foil or applied to the support in thin or thick layer techniques.

4. Illuminating device according to Claim 3, **characterised in that** the illuminating foil is glued or laminated onto the support (3, 4).

5. Illuminating device according to one of Claims 1 to 4, **characterised in that** the support (3, 4) which accommodates the electro-luminescence layer structure (2) and/or the frame or the compact module is with regard to load and/or shape positively inserted into a receptacle which is arranged on or in the defining walls or the inside lining or built-in units of the vehicle and connected thereto.

6. Illuminating device according to Claim 5, **characterised in that** the receptacle is arranged in a sun visor (14) of the vehicle, and a mirror (12) arranged in the sun visor is positioned adjacent the electro-luminescence layer structure (2).

7. Illuminating device according to Claim 6, **characterised in that** the mirror is connected to the first module and arranged on the support (3, 4) or acts itself as a support, and the electro-luminescence layer structure is arranged alongside or on a portion of the mirror (12), thus establishing an illuminating mirror assembly unit (11).

8. Illuminating device according to one of Claims 6 or 7, **characterised in that** the electro-luminescence layer structure (2) is arranged on the inside of a cover (15) which covers the mirror (12) in the receptacle.

9. Device according to Claim 7, **characterised in that** the mirror assembly unit is connected to a housing part which comprises a slide which covers the mirror or a cover which covers the mirror.

10. Illuminating device according to Claim 5, **characterised in that** the receptacle is arranged on or in the defining wall or in the door element of a glove compartment.

11. Illuminating device according to Claim 5, **characterised in that** the receptacle is arranged in the inner lining of the roof.

12. Illuminating device according to Claim 5, **characterised in that** the receptacle is arranged in a mirror housing on a side of an outside mirror facing away from the user of the vehicle.

13. Illuminating device according to one of Claims 1 to 12, **characterised in that** the control unit (5) comprises a current converter which converts a direct current, preferably the battery current of the vehicle, into an alternating current of more than 100 V with a frequency of more than 50 Hz.

14. Illuminating device according to Claim 13, **characterised in that** the control unit (5) comprises a control (25, 26, 27, 29) which includes a light sensor (25) for detecting the brightness of the electro-luminescence layer structure (2) and which regulates the alternate current to match a desired brightness.

15. Illuminating device according to one of Claims 1 to 5, 12 or 13, **characterised in that** the electro-luminescence layer structure is integrated within the housing of an outside mirror in such a manner that the following layer structure results: a glass layer, an etched mirror layer, a dichroite layer, a lamella layer which deflects the radiation, and the electro-luminescence layer structure.

## Revendications

1. Dispositif d'éclairage disposé sur des véhicules automobiles et/ou à l'intérieur de véhicules automobiles, comprenant un arrangement de couches électroluminescentes (2) qui présente au moins une première couche d'électrode, une couche de diélectrique, une couche éclairante électroluminescente et une deuxième couche d'électrode transparente, l'arrangement de couches électroluminescentes (2) étant disposé sur un support (3, 4) et/ou dans un cadre (9, 13) et les couches d'électrode étant reliées à un dispositif de commande par tension alternative (5), **caractérisé en ce que** le dispositif de commande par tension alternative est disposé sur un circuit imprimé (4) qui est relié au support (3) et/ou forme en même temps le support pour l'arrangement de couches électroluminescentes (2), le circuit imprimé (4) avec le dispositif de commande (5) et l'arrangement de couches électroluminescentes (2) et, le cas échéant, une protection transparente (8) qui recouvre l'arrangement de couches électroluminescentes (2) formant un module compact.

2. Dispositif d'éclairage selon la revendication 1, **caractérisé en ce que** l'arrangement de couches électroluminescentes présente d'autres couches comme une couche de pigments colorés, des couches de dispersion de la lumière, des couches qui modifient le sens de propagation du rayonnement émis de la couche éclairante, une couche de réflexion et/ou des couches de protection.

3. Dispositif d'éclairage selon l'une des revendications 1 ou 2, **caractérisé en ce que** l'arrangement de couches électroluminescentes est réalisé sous la forme d'un film lumineux ou qu'il est appliqué sur le support par la technique de couche mince ou de couche épaisse.

4. Dispositif d'éclairage selon la revendication 3, **caractérisé en ce que** le film lumineux est collé ou laminé sur le support (3, 4).

5. Dispositif d'éclairage selon l'une des revendications 1 à 4, **caractérisé en ce que** le support (3, 4) et/ou le cadre recevant l'arrangement de couches électroluminescentes (2) ou le module compact est inséré par engagement positif ou par adhérence dans un logement qui est disposé sur ou dans les parois de délimitation ou l'habillage intérieur ou encore les éléments installés dans le véhicule et il est relié avec ceux-ci.

6. Dispositif d'éclairage selon la revendication 5, **caractérisé en ce que** le logement est disposé dans un pare-soleil (14) du véhicule, un miroir (12) disposé dans le pare-soleil étant disposé à côté de l'arrangement de couches électroluminescentes (2).

7. Dispositif d'éclairage selon la revendication 6, **caractérisé en ce que** le miroir est relié au premier module et qu'il est disposé sur le support (3, 4) ou qu'il forme lui-même le support, l'arrangement de couches électroluminescentes étant disposé à côté ou sur une partie du miroir (12) et forme ainsi un module miroir éclairant (11).

8. Dispositif d'éclairage selon l'une des revendications 6 ou 7, **caractérisé en ce que** l'arrangement de couches électroluminescentes (2) est disposé sur le côté intérieur du miroir (12) dans le clapet (15) qui recouvre le logement.

9. Dispositif d'éclairage selon la revendication 7, **caractérisé en ce que** le module miroir est relié à une partie de boîtier qui présente un coulisseau recouvrant le miroir ou un clapet recouvrant le miroir.

10. Dispositif d'éclairage selon la revendication 5, **caractérisé en ce que** le logement est disposé sur ou dans la paroi de délimitation ou dans l'élément de porte d'un vide-poches.

11. Dispositif d'éclairage selon la revendication 5, **caractérisé en ce que** le logement est disposé dans l'habillage intérieur du plafond.

12. Dispositif d'éclairage selon la revendication 5, **caractérisé en ce que** le logement est disposé dans un boîtier de miroir sur un côté d'un rétroviseur extérieur opposé à l'utilisateur du véhicule.

13. Dispositif d'éclairage selon l'une des revendications 1 à 12, **caractérisé en ce que** le dispositif de commande (5) présente un convertisseur de tension qui convertit une tension continue, de préférence la tension de la batterie du véhicule, en une tension alternative supérieure à 100 V avec une fréquence supérieure à 50 Hz.

14. Dispositif d'éclairage selon la revendication 13, **caractérisé en ce que** le dispositif de commande (5) présente un dispositif de réglage (25, 26, 27, 29) qui comprend un capteur de lumière (25) pour capter la luminosité de l'arrangement de couches électroluminescentes (2) et qui régule la tension alternative en fonction d'une luminosité souhaitée.

15. Dispositif d'éclairage selon l'une des revendications 1 à 5, 12 ou 13, **caractérisé en ce que** l'arrangement de couches électroluminescentes est intégré à l'intérieur du boîtier d'un rétroviseur extérieur de manière à obtenir la structure en couches suivante : une couche en verre, une couche miroir corrodée, une couche dichroïde, une couche de lamelles qui dévie le rayonnement et l'arrangement de couches électroluminescentes.
